# EUROPEAN PATENT APPLICATION

(11) **EP 0 867 141 A1**
(43) Date of publication of application: **30.09.1998**
(21) Application number: 97105237.8
(22) Date of filing: 27.03.1997
(51) Int. Cl.: A47J 27/56, A47J 27/022, A47J 36/34

(54) **Device for the boiling of liquids, which prevents their overflowing**

(71) Applicant: LAGOSTINA S.p.A., 28026 Omegna, Verbania (IT)
(72) Inventor: Staffolani, Nicola, 06100 Perugia (IT)
(74) Representative: Petruzzelli, Antonio European Patent Attorney

(57) **Abstract**

The device for the boiling of liquids, in the form of a pot, comprises a base (1) with a region (2') formed by a solid thickness in a material having good or excellent heat conductivity and a region (2'') of the same base (1) which forms a "sandwich". In this latter region the upper and lower layers (3) are in metal, like the remaining part of the base (1), while the internal layers of the "sandwich" (2'') are formed by heat-insulating and refractory materials such as sand or fibre glass.
Alternatively, the less elongated region (2'), formed by a solid material without a cavity inside thereof, with good heat conductivity, can be welded directly to the heat-insulating "sandwich" region (2'').

## Description

The present invention relates to a device in the form of a pot for boiling liquid substances, more particularly liquid food substances, such as milk, soups or the like, preventing their overflowing.

In traditional pots, the metal base, usually thicker than the side walls of the pot, transmits the heat of the flame or of the plate of the electric cooker by conduction to the liquid which is contained in the pot, until the required temperature is reached, for example up to the temperature of boiling of the liquid.

The base of the pot is made in a material having homogeneous properties, that is to say it transmits to the liquid the same quantity of heat in the unit of time through the unit of area in each point of the base itself. The heat which is transmitted to the liquid creates rising currents of the liquid which reach the surface and which are transformed into currents moving towards the base of the pot, creating vortices which interfere with other hot currents coming from the base, thus generating a greater turbulence which, as the temperature of the water increases, leads to overflowing of the liquid from the pot.

The object of the present invention is to avoid interference between the aforementioned vortical currents of liquid in such a way that the heat is distributed in the liquid by means of said currents, through convection, without however making the same liquid overflow.

This object is achieved, according to the present invention, by means of uneven transmission of the heat intensity from the source of heat to the liquid above, creating areas of different temperature on the base of the pot, so that there is no interference between the aforementioned currents.

The present invention will now be described in greater detail, by way of a non-limiting example, referring to its particular embodiments illustrated in the accompanying drawings, which show:
Fig. 1a a plan view of the circular base of a pot according to the present invention;
Fig. 1b a view sectioned along line A-A of Fig. 1a;
Fig. 2a a view from below of the circular base of a pot according to another possible embodiment of the present invention;
Fig. 2b a view sectioned along line B-B of Fig. 2a;
Fig. 2c a view sectioned along line C-C of Fig. 2a;
Fig. 3a a preferred embodiment of the present invention, according to a diametrical view sectioned along D-D of Fig. 3b;
Fig. 3b a plan view of the pot of Fig. 3a.

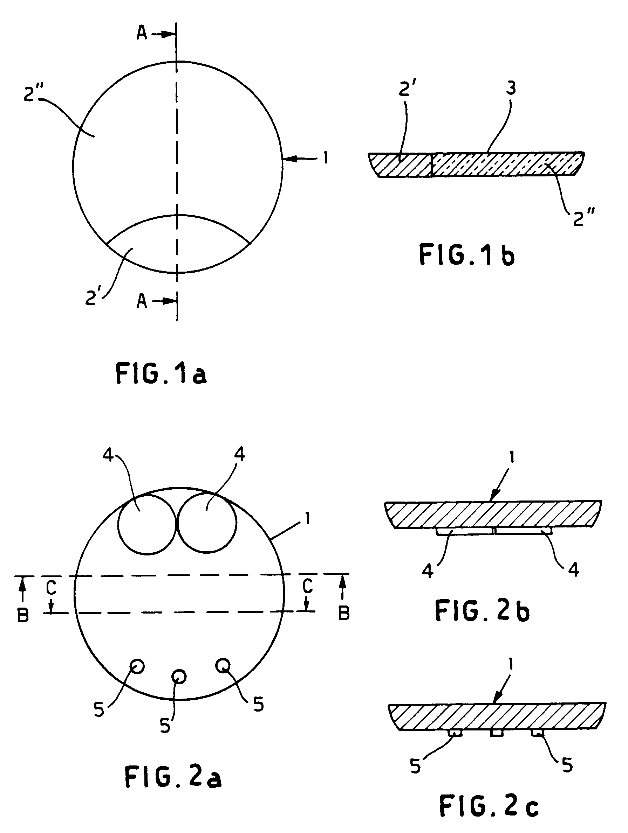

In Figs. 1a to 3b, corresponding parts are denoted by the same reference numerals.

Fig. 1a shows the circular base 1 of the pot, which could if necessary also be square, oval, polygonal or of any other regular shape required.

A region of the base 1 is formed by a solid thickness 2' of a metal material, for example stainless steel or another material used for the base of any conventional pot and having good or excellent heat conductivity.

A thickness with excellent heat conductivity could also be lined with stainless steel.

A second region 2" of the base 1 is formed instead by an insulating and refractory layer, for example sand or fibre glass or another biocompatible material (i.e. one which is not harmful to health), enclosed and sealed in a cavity formed by a thin wall 3 in stainless steel or another material which is joined without a gap to the same metal material of the region 2', so that nothing will be seen from the outside and the base 1 will be perfectly flat.

Thus, in the region 2'', a "sandwich" will be formed, composed of three layers: metal-refractory and heat-insulating material-metal. Several layers of different refractory and heat-insulating materials can also be provided, inside the metal wall 3. The two regions 2' and 2'' may also be welded one to the other.

A pot comprising the base 1 as described above transmits very little heat to the liquid above the region 2'', so that rising currents of very hot liquid are not created, which currents may interfere with the vortical currents produced by the region 2'.

Fig. 2a shows a second embodiment, wherein the base 1 has parts of the thickness 4 which are raised by a few millimetres, and which in the drawing have a circular shape. Second raised parts 5, having the shape of small pins and of the same thickness as the raised parts 4, maintain the pot in a perfectly horizontal position.

However, the surface for supporting the parts 4 on the plate of the electric cooker is much larger than that of the pins 5. This means that these raised parts 4 are directly in contact with the heated plate, while the remaining region of the base is, with the exception of the small pins 5, raised by a few millimetres from the plate.

Thus a very hot region is provided thanks to the raised parts 4, and a remaining region which is less hot.

This effect can be regulated by appropriately dimensioning the thickness of the parts 4 and of the pins 5 and by varying the heat supplied by the plate of the electric cooker.

The raised parts 4 may be welded or may form a single body with the base 1.

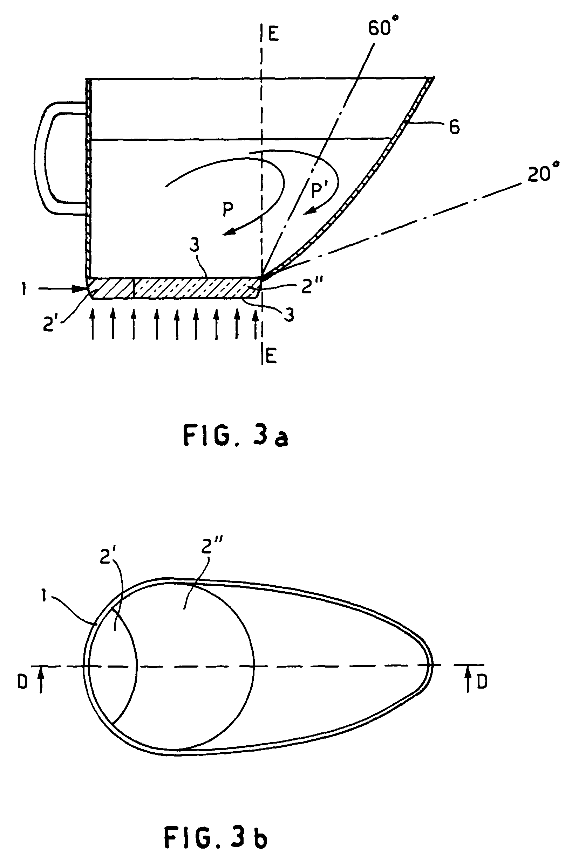

Fig. 3a shows a pot or device according to the invention for preventing the overflowing of a liquid during boiling.

In this case the pot has a base 1 which has the same structure as the base described with reference to Fig. 1a, however the pot is not cylindrical and in any case has an irregular shape elongated in the direction of the plane of symmetry D-D of Fig. 3b. Only its base 1 has a regular shape, preferably circular or oval, while its side wall 6 extends to the right in Fig. 3a and is substantially cylindrical on the left side in Fig. 3a, as shown also in Fig. 3b.

This special shape of the pot allows the vortical currents of hot liquid outlined by the arrows P, P' not to interfere with other currents, which currents cannot be formed above the less hot region 2'', so that the currents of the arrows P, P' may descend undisturbed along the walls or in regions further away from the same walls according to the dimensions of the pot.

Since the pot in Fig. 3a is asymmetrical, in relation to the axis orthogonal to the line D-D in Fig. 3b, it may be overturned if filled beyond a certain level. Therefore a sign will be provided on the wall to indicate the maximum admissible level.

Moreover, since the base (1) is somewhat thick, this contributes to avoiding overturning. In any case the centre of inertia of the pot and liquid system must not be on the right of the line E-E in Fig. 3a.

The wall 6 preferably has a slant of between 20 and 60° in relation to the vertical line E-E, as indicated by the dotted and dashed lines.

The present invention may be modified both as regards the materials used and the shape or extension of the regions for differentiated heating of the base 1.

Moreover, the shape of the pot in Fig. 3a is not binding. It could have a symmetrical shape which makes it more stable, if necessary with a central region of the base in a conductive material and two side regions of the base in an insulating material.

The same object achieved by the present invention may also be reached by using a plate which has the same structure as the base 1 of Figs. 1a and 1b and by placing this plate on the source of heat and then placing on the plate any pot, including a conventional type. Another system consists of making holes of a smaller diameter on a peripheral circular segment of the gas distributor of the gas cooker and holes of a larger diameter on the remaining peripheral circular segment, in order to have an asymmetrical distribution of the flame of the cooker.

## Claims

1. Device for the boiling of liquids, suitable for preventing their overflowing, having the form of a pot, characterised in that it comprises on its base means (2', 2'', 3; 4, 5) for an uneven transmission of the heat intensity from the base (1) of the device to the liquid contained in the same.

2. Device for the boiling of liquids according to claim 1, characterised in that the base (1) of the device comprises a region (2') of solid thickness in a material with high heat conductivity, used for the base of pots, and one or more regions (2'') formed by a thin wall (3) of the same material which forms the region (2') and which encloses a sealed cavity, said cavity being filled by one or more layers of heat-insulating and refractory materials, said thin wall (3) being flush with the upper and lower surfaces of said solid thickness region (2') and joining with the latter region without a gap, so as to restrict or eliminate interference between the currents of hot liquid.

3. Device for the boiling of liquids according to claim 1, characterised in that the base (1) is formed by a solid and even thickness in a material having good heat conductivity and comprises raised parts (4) on the side of the base (1) which faces towards the plate of the electric cooker, means of support (5) for maintaining the device in a horizontal position on the plate being provided in the region of the base (1) diametrically opposite to the position of the raised parts (4), said support means (5) having a surface for resting on the plate of the electric cooker which is much lower than that of the raised parts (4) in order to reduce to a minimum the quantity of heat which passes through them by conduction.

4. Device according to claims 1 and 2, characterised in that it has an asymmetrical shape with a side wall (6) which extends beyond the base (1) of the device itself, the region (2'') of the base (1) close to said side wall (6) being formed by one or more layers in a heat-insulating and refractory material enclosed by a thin wall (3) in metal, which wall is flush with the upper and lower surfaces of the remaining region (2') of the base (1), joining with the latter without a gap.

5. Device according to the previous claims, characterised in that the conductive region (2') and the heat-insulating "sandwich" regions (2'') are welded one to the other.

6. Plate to be placed between the source of heat and the device of the previous claims, comprising a first solid thickness region in material having high heat conductivity, for example stainless steel, and one or more regions formed by one or more layers of heat-insulating and refractory materials sealed inside a thin wall of the same material which forms the first region, in such a way that externally the wall has on both sides a smooth and unbroken surface.

7. Device according to any one of the previous claims, wherein the heat-insulating and refractory material is sand, fibre glass or a material used for brake linings, provided it is biocompatible, that is to say it is not harmful to health.
